(19) Europäisches Patentamt
European Patent Office
Office européen des brevets

(11) **EP 3 335 563 A1**

(12) **EUROPÄISCHE PATENTANMELDUNG**

(43) Veröffentlichungstag:
**20.06.2018 Patentblatt 2018/25**

(51) Int Cl.:
*A21B 1/24* *(2006.01)*        *A21B 1/26* *(2006.01)*
*A21B 1/28* *(2006.01)*        *A21B 1/48* *(2006.01)*

(21) Anmeldenummer: **16204210.5**

(22) Anmeldetag: **15.12.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Haas Food Equipment GmbH**
**1210 Wien (AT)**

(72) Erfinder:
• **MILLER, Karl**
  **1100 Wien (AT)**
• **BIBARIC, Markus**
  **3400 Kierling (AT)**
• **JIRASCHEK, Stefan**
  **2202 Königsbrunn (AT)**

(74) Vertreter: **Puchberger & Partner Patentanwälte**
**Reichsratsstraße 13**
**1010 Wien (AT)**

(54) **VERFAHREN ZUR STEUERUNG UND/ODER REGELUNG DES GASDURCHSATZES IM BACKRAUM EINER BACKVORRICHTUNG**

(57)      Verfahren zur Steuerung und/oder Regelung des Gasdurchsatzes im Backraum (1) einer Backvorrichtung (2), bei der zum Herstellen gebackener Produkte eine Backzangenkette (3) entlang einer Umlaufbahn durch den Backraum (1) bewegt wird, umfassend folgende Schritte: gesteuertes oder geregeltes Zuführen eines Brennstoffvolumenstroms (6), gegebenenfalls gesteuertes oder geregeltes Zuführen eines Konvektionsluftvolumenstroms (9), und gesteuertes oder geregeltes Absaugen eines Absaugvolumenstroms (10), wobei zur Steuerung und/oder Regelung des Absaugvolumenstroms (10) und/oder des Konvektionsluftvolumenstroms (9) eine Volumenbilanz des in den Backraum (1) eingebrachten Volumenstroms, des im Backraum (1) expandierenden Volumenstroms (11) und des aus dem Backraum (1) abgesaugten Volumenstroms gebildet wird, und wobei die Leistung des Absauggebläses und/oder die Leistung des Konvektionsgebläses derart gesteuert und/oder geregelt werden, dass der abgesaugte Volumenstrom größer oder gleich der Summe des eingebrachten Volumenstroms und des im Backraum (1) expandierenden Volumenstroms (11) ist, sodass der eingebrachte Volumenstrom und der im Backraum (1) expandierende Volumenstrom (11) über das Absauggebläse abgesaugt werden.

Fig.1

**Beschreibung**

Die Erfindung betrifft ein Verfahren gemäß Oberbegriff des unabhängigen Patentanspruchs. Insbesondere betrifft die Erfindung ein Verfahren zur Steuerung und/oder Regelung des Gasdurchsatzes im Backraum einer Backvorrichtung, bei der zum Herstellen gebackener, bevorzugt essbarer Produkte eine endlose Backzangenkette entlang einer geschlossenen Umlaufbahn durch eine Vorkopföffnung von einem Backraum in einen Vorkopf und durch eine Vorkopföffnung zum Vorkopf in den Backraum bewegt wird.

Backvorrichtungen zur industriellen Herstellung von gebackenen, bevorzugt essbaren, Produkten sind in unterschiedlichen Ausführungen bekannt und publiziert.

Beispielsweise sind Backvorrichtungen bekannt, bei denen entlang einem Endlosförderer offenbare und schließbare Backzangen vorgesehen sind, wobei die Backzangen aneinandergereiht jeweils nacheinander einen Backmassenauftragsbereich zum Auftragen einer Backmasse auf eine geöffnete Backzange, einen Schließbereich zum Schließen der Backzangen, einen über eine Heizvorrichtung beheizten Backraum zum Backen der Backprodukte in den geschlossenen Backzangen, einen Öffenbereich zum Öffnen der Backzangen und einen Backproduktentnahmebereich zur Entnahme der gebackenen Produkte aus den geöffneten Backzangen durchlaufen.

Die folgende Erfindung betrifft insbesondere eine derartige Backvorrichtung, die zur Herstellung von Waffelprodukten, wie beispielsweise von Flachwaffeln oder Hohlwaffeln, geeignet und/oder eingerichtet ist.

Auch bei der Produktion von Backprodukten wird erhöhtes Augenmerk auf die Qualität und auf die Effizienz der Produktion gelegt. Bei der Effizienz der Produktion ist insbesondere die Energieeffizienz von großer Bedeutung.

Herkömmliche Backöfen zur industriellen Herstellung von Waffelprodukten weisen ein langgestrecktes Gehäuse auf, das an seiner Unterseite offen ausgebildet ist und das im oberen Bereich einen Abzug aufweist, sodass der gesamte Backraum von unten nach oben durchspült wird. Durch diese Anordnung gerät Umgebungsluft in großen Mengen in den Backraum und verringert dadurch die Backraumtemperatur. Um diesen Wärmeverlust ausgleichen zu können, wird gemäß Stand der Technik die Heizleistung erhöht.

Zur Verbesserung dieser Backöfen sind gattungsgemäße Backvorrichtungen mit einem im Wesentlichen geschlossenen Backraum bekannt, wobei zur Erzeugung künstlicher Konvektion und zur Durchspülung des Backraums gegebenenfalls ein Konvektionsgebläse vorgesehen ist.

Derartige Backvorrichtungen umfassen meist einen Vorkopf, in dem der Backmassenauftrag geschieht. Dieser Vorkopf ist meist unbeheizt und wird bevorzugt mit Frischluft gespült, sodass die Temperatur im Vorkopf geringer ist als im Backraum und insbesondere im Wesentlichen der Umgebungstemperatur entspricht. Die an dem Endlosförderer bewegten Backzangen werden von dem Backraum in den Vorkopf bewegt, womit eine Öffnung des Backraums zum Vorkopf vorgesehen sein muss. Um zu verhindern, dass heißes Backraumgas in den Vorkopf eindringt, wurden gemäß Stand der Technik bisher Absauggebläse im Abzug des Backraums verwendet. Deren Absaugleistung wurde derart hoch eingestellt, dass ohne Berücksichtigung der tatsächlich notwendigen Absaugleistung mit Sicherheit auch ein Teilstrom aus dem Vorkopf und Luft aus der Halle durch die Vorkopföffnung durch das Absauggebläse abgesaugt wird. Durch diese überhöhte Absaugleistung wird jedoch mehr Wärme als notwendig entzogen, womit Wärmeenergie verloren geht.

Um mit Sicherheit vermeiden zu können, dass heißes Backraumgas in den Vorkopf des Backofens gelangen kann, wurde jedoch von einer zu geringen Absaugleistung bisher Abstand genommen.

Darüber hinaus wird die Effizienz des Betriebs herkömmlicher Backvorrichtungen auch durch die Wartung der Vorrichtung verringert. So kommt es insbesondere durch Kondensatbildung, beispielsweise in der Aufwärmphase der Backvorrichtung, zu einer Korrosion innenliegender Teile. Zum Auswechseln dieser Teile muss die Produktion angehalten werden, was zu einer wesentlichen Verringerung der Effizienz der Backvorrichtung, insbesondere der Energieeffizienz, führt.

Aufgabe der Erfindung ist es nun, die Nachteile des Standes der Technik zu überwinden und insbesondere eine Backvorrichtung zu schaffen, die eine verbesserte Effizienz aufweist. Dies umfasst insbesondere, dass der Gasdurchsatz im Backraum der Backvorrichtung optimiert ist. Weiters soll durch die Erfindung ein Eintritt von Backraumgasen in den Vorkopf verhindert werden. Ferner umfasst dies gegebenenfalls auch, dass spezielle Aufwärm- und Trocknungsmodi vorgesehen sind, um eine Korrosion von Teilen der Backvorrichtung zu verhindern.

Die erfindungsgemäße Aufgabe wird insbesondere durch die Merkmale des unabhängigen Patentanspruchs gelöst.

Gegebenenfalls betrifft die Erfindung ein Verfahren zur Steuerung und/oder Regelung des Gasdurchsatzes im Backraum einer Backvorrichtung, bei der zum Herstellen gebackener, bevorzugt essbarer, Produkte eine endlose Backzangenkette entlang einer geschlossenen Umlaufbahn durch eine Vorkopföffnung von einem Backraum in einen Vorkopf und durch eine Vorkopföffnung vom Vorkopf in den Backraum bewegt wird, umfassend folgende Schritte:

- gesteuertes oder geregeltes Zuführen eines Brennstoffvolumenstroms eines, insbesondere gasförmigen, Brennstoffs und eines Primärluftvolumenstroms in die Backvorrichtung, wobei der Brennstoff mit der Primärluft des Primärluftvolumenstrom zur Beheizung des Backraums in einer Heizvorrichtung verbrannt wird,
- gegebenenfalls gesteuertes oder geregeltes Zuführen eines Konvektionsluftvolumenstroms über ein Konvektionsgebläse, wobei der Konvektionsluftvolumenstrom zur Bildung einer künstlichen Konvektionsströmung im Backraum und gegebenenfalls als Sekundärluft den Backraum durchströmt, - und gesteuertes oder geregeltes Absaugen eines Absaugvolumenstroms aus dem Backraum durch ein Absauggebläse.

Gegebenenfalls kann vorgesehen sein, dass zur Steuerung und/oder Regelung des Absaugvolumenstroms und/oder des Konvektionsluftvolumenstroms eine Volumenbilanz des in den Backraum eingebrachten Volumenstroms, des im Backraum expandierenden Volumenstroms und des aus dem Backraum abgesaugten Volumenstroms gebildet wird, und dass die Leistung des Absauggebläses und/oder die Leistung des Konvektionsgebläses derart gesteuert und/oder geregelt werden, dass der abgesaugte Volumenstrom größer oder gleich der Summe des eingebrachten Volumenstroms und des im Backraum expandierenden Volumenstroms ist, sodass der eingebrachte Volumenstrom und der im Backraum expandierende Volumenstrom über das Absauggebläse abgesaugt, insbesondere vollständig abgesaugt werden.

Gegebenenfalls kann vorgesehen sein, dass der im Backraum expandierende Volumenstrom der Volumenbilanz den durch die Verbrennung des Brennstoffvolumenstroms mit dem Primärluftvolumenstrom entstehenden Verbrennungskomponentenvolumenstrom und einen beim Backen einer Backmasse austretenden Backdampfvolumenstrom, umfasst oder dass der im Backraum expandierende Volumenstrom der Volumenbilanz durch den durch die Verbrennung des Brennstoffvolumenstroms mit dem Primärluftvolumenstrom entstehenden Verbrennungskomponentenvolumenstrom und durch einen beim Backen einer Backmasse austretenden Backdampfvolumenstrom gebildet ist.

Gegebenenfalls kann vorgesehen sein, dass der in den Backraum eingebrachte Volumenstrom der Volumenbilanz den Konvektionsluftvolumenstrom und gegebenenfalls einen durch die Vorkopföffnung angesaugten Vorkopfvolumenstrom umfasst, oder dass der in den Backraum eingebrachte Volumenstrom der Volumenbilanz durch den Konvektionsluftvolumenstrom und den gegebenenfalls durch die Vorkopföffnungen angesaugten Vorkopfvolumenstrom gebildet ist.

Gegebenenfalls kann vorgesehen sein, dass der aus dem Backraum abgesaugte Volumenstrom der Volumenbilanz dem Absaugvolumenstrom entspricht.

Gegebenenfalls kann vorgesehen sein, dass bei der Bildung der Volumenbilanz des in den Backraum eingebrachten Volumenstroms, des im Backraum expandierenden Volumenstroms und des aus dem Backraum abgesaugten Volumenstroms der Unterschied zwischen der Temperatur des eingebrachten Volumenstroms beim Eintritt in die Backvorrichtung oder in den Backraum und der Temperatur des eingebrachten Volumenstroms beim Austritt aus der Backvorrichtung oder aus dem Backraum berücksichtigt wird, wobei die Volumenexpansion durch die Aufheizung des eingebrachten Volumenstroms berücksichtigt wird oder werden.

Gegebenenfalls kann vorgesehen sein, dass der beim Backen der Backmasse austretende Backdampfvolumenstrom, nach folgender Vorschrift gebildet wird:

$$\dot{V}_{Backdampf} = \frac{\dot{m}_{Teigwasser}}{\rho_{Teigdampf}}$$

wobei $\dot{V}_{Backdampf}$ der austretende Backdampfvolumenstrom ist, wobei $\dot{m}_{Teigwasser}$ der beim Backen aus der Backmasse austretende Backmassenwassermassenstrom ist und wobei $\rho_{Teigdampf}$ die Dichte des austretenden Backdampfvolumenstroms ist.

Gegebenenfalls kann vorgesehen sein, dass der abgesaugte Volumenstrom um einen Sicherheitsfaktor im Bereich zwischen 1,00 und 1,50, bevorzugt zwischen 1,05 und 1,25, besonders bevorzugt 5% größer ist als die Summe des eingebrachten Volumenstroms und des im Backraum expandierenden Volumenstroms, wodurch ein Eintritt von Backraumgasen in den Vorkopf verhindert wird.

Gegebenenfalls kann vorgesehen sein, dass die Leistung des Absauggebläses durch die Steuerung oder Regelung der Frequenz des Hauptabzugsventilators der Backvorrichtung erfolgt.

Gegebenenfalls kann vorgesehen sein, dass die Bildung der Volumenbilanz nach folgender Vorschrift durchgeführt wird:

$$\dot{V}_{Absaug} = \left( \left( \dot{V}_{CO2} + \dot{V}_{H_2O} + \dot{V}_{N_2} + \dot{V}_{\text{Überschussluft}, T_{Ab}} \right) + \left( \dot{V}_{Konvektionsluft, T_{Zu}} \cdot \frac{T_{Ab}}{T_{Zu}} \right) + \dot{V}_{Backdampf} \right.$$

$$\left. + \dot{V}_{Vorkopf, T_{Ab}} \right) \cdot S$$

wobei $\dot{V}_{Absaug}$ der Absaugvolumenstrom ist,

wobei der Verbrennungskomponentenvolumenstrom aus $\dot{V}_{CO2}$, $\dot{V}_{H_2O}$, $\dot{V}_{N_2}$ und $\dot{V}_{\text{Überschussluft}, T_{Ab}}$ gebildet ist,

wobei $\dot{V}_{CO2}$ der bei der Verbrennung des Brennstoffs mit der Primärluft und gegebenenfalls Sekundärluft entstehende Kohlendioxidvolumentrom ist, wobei $\dot{V}_{H_2O}$ der bei der Verbrennung des Brennstoffs mit der Primärluft und gegebenenfalls Sekundärluft entstehende Wasservolumenstrom ist,

wobei $\dot{V}_{N_2}$ der Stickstoffvolumenstrom der zur Verbrennung verwendeten Primärluft und gegebenenfalls Sekundärluft ist,

wobei $\dot{V}_{\text{Überschussluft}, T_{Ab}}$ der bei einer Verbrennung des Brennstoffs mit Luftüberschuss auftretende Luftüberschussvolumenstrom mit der Temperatur beim Austritt aus der Backvorrichtung oder aus dem Backraum ist,

wobei $\dot{V}_{Konvektionsluft, T_{Zu}}$ der Konvektionsluftvolumenstrom mit der Temperatur am Eintritt in die Backvorrichtung oder in den Backraum ist,

wobei $T_{Ab}$ die Temperatur des Konvektionsluftvolumenstroms beim Austritt aus der Backvorrichtung oder aus dem Backraum ist,

wobei $T_{Zu}$ die Temperatur des Konvektionsluftvolumenstroms beim Eintritt in die Backvorrichtung oder in den Backraum ist,

wobei $\dot{V}_{Backdampf}$ der beim Backen der Backmasse austretende Backdampfvolumenstrom ist,

wobei $\dot{V}_{Vorkopf, T_{Ab}}$ der Vorkopfvolumenstrom mit der Temperatur beim Austritt aus der Backvorrichtung oder aus dem Backraum ist"

und wobei $s$ der Sicherheitsfaktor ist.

Gegebenenfalls kann vorgesehen sein, dass dem Verfahren eine Vorheizphase und eine Trocknungsphase vorgeschalten ist und das Verfahren einen ersten Normalbetriebsmodus und einen zweiten Normalbetriebsmodus umfasst, und dass die Vorheizphase der Trocknungsphase vorgeschalten ist, und dass die Trocknungsphase dem ersten Normalbetriebsmodus vorgeschalten ist, und dass der ersten Normalbetriebsmodus dem zweiten Normalbetriebsmodus vorgeschalten ist.

Gegebenenfalls kann vorgesehen sein, dass dem Verfahren eine Vorheizphase vorgeschalten ist, wobei die in der Backvorrichtung angeordnete Heizvorrichtung mit einer Leistung zwischen 25% und 75%, bevorzugt zwischen 35% und 65%, besonders bevorzugt 50% ihrer maximalen Leistung betrieben wird und das Absauggebläse und das Konvektionsgebläses mit einer Leistung zwischen 50 und 100%, bevorzugt zwischen 75% und 100%, besonders bevorzugt 100% ihrer maximalen Leistung betrieben werden.

Gegebenenfalls kann vorgesehen sein, dass dem Verfahren eine Trocknungsphase vorgeschalten ist, wobei die in der Backvorrichtung angeordnete Heizvorrichtung mit einer Leistung zwischen 50% und 85%, bevorzugt zwischen 60% und 75%, besonders bevorzugt 66% ihrer maximalen Leistung betrieben wird und das Absauggebläse und das Konvektionsgebläse mit einer Leistung zwischen 50% und 100%, bevorzugt zwischen 75% und 100%, besonders bevorzugt 100% ihrer maximalen Leistung betrieben werden.

Gegebenenfalls kann vorgesehen sein, dass das Verfahren einen ersten Normalbetriebsmodus umfasst, wobei in diesem ersten Normalbetriebsmodus die in der Backvorrichtung angeordnete Heizvorrichtung mit einer Leistung zwischen 50% und 100%, bevorzugt zwischen 75% und 100%, besonders bevorzugt 100% ihrer maximalen Leistung betrieben wird.

Gegebenenfalls kann vorgesehen sein, dass das Verfahren einen zweiten Normalbetriebsmodus umfasst, wobei in diesem zweiten Normalbetriebsmodus die Leistung der in der Backvorrichtung angeordneten Heizvorrichtung durch Vorgabe einer Zieltemperatur, insbesondere einer Backplattenzieltemperatur, geregelt oder gesteuert wird, wobei die Backplattentemperatur durch eine auf der Außenseite einer Backplatte der Backzangenkette angeordneten Temperaturmessvorrichtung, insbesondere eines Temperatursensors bestimmt wird oder bestimmbar ist.

Gegebenenfalls kann vorgesehen sein, dass der Konvektionsluftvolumenstrom einen Rahmenkühlungsluftvolumenstrom umfasst, wobei der Rahmenkühlungsluftvolumenstrom dazu eingerichtet ist, Teile der Backvorrichtung zu kühlen.

Gegebenenfalls ist vorgesehen, dass sich die endlose Backzangenkette längs einer in sich geschlossenen Umlaufbahn kontinuierlich umlaufend durch den Backraum bewegt, und dass die Backzangenkette auf- und zumachbare, insbesondere auf- und zuklappbare Backzangen umfasst, und dass der der Backraum bevorzugt als im Wesentlichen geschlossener Backraum ausgebildet ist.

In allen Ausführungsformen kann vorgesehen sein, dass der Backraum ein im Wesentlichen geschlossener Backraum ist. Dies bedeutet insbesondere, dass der Backraum lediglich mit den zur Zuführung und Abführung der Backzangen und der genannten Volumenströme notwendigen Öffnungen versehen ist. Durch die im Wesentlichen geschlossene Ausführung des Backraums wird auch eine horizontale oder eine der Haupterstreckungsrichtung der Backzangenkette folgende Konvektionsströmung der Gase im Backraum bewirkt oder begünstigt.

In allen Ausführungsformen kann der in dem Backraum expandierende Volumenstrom einem expandierenden eingebrachten Volumenstrom entsprechen. Der im Backraum expandierende Volumenstrom kann aus in den Backraum eingebrachten Komponenten gebildet sein oder diese umfassen, welche in dem Backraum expandieren. Der Massenstrom der einzelnen Komponentenströme bleibt somit im Wesentlichen konstant. Nur der Volumenstrom dieser Komponentenströme wird gegebenenfalls größer. Der im Backraum expandierende Volumenstrom kann durch den Backdampfvolumenstrom, welcher durch Phasenübergang des in der Backmasse enthaltenen Teig- oder Backmassenwassers entsteht, umfassen oder daraus gebildet sein. Der im Backraum expandierende Volumenstrom kann den Verbrennungskomponentenvolumenstrom, welcher durch die Verbrennung des Brennstoffvolumenstroms und dem Primärluftvolumenstrom entsteht, umfassen oder daraus gebildet sein.

Bei dem erfindungsgemäßen Verfahren wird eine Volumenbilanz gebildet, die alle maßgeblichen Volumenströme der Backvorrichtung berücksichtigt, sodass der Gasdurchsatz im Backraum optimiert werden kann. Dazu sind gegebenenfalls Sensoren, Steuerungsvorrichtungen für Gebläse und/oder hinterlegte Kennfelder vorgesehen. Bevorzugt werden in der Volumenbilanz der in den Backraum eingebrachte Volumenstrom, der im Backraum expandierende Volumenstrom und der aus dem Backraum abgesaugte Volumenstrom berücksichtigt. In weiterer Folge werden ein oder mehrere Gebläse derart geregelt, dass sichergestellt ist, dass der abgesaugte Volumenstrom größer oder gleich dem eingebrachten Volumenstrom und dem im Backraum expandierenden Volumenstrom ist. Als größer oder gleich ist der abgesaugte Volumenstrom deshalb bezeichnet, da gegebenenfalls ein Sicherheitsfaktor verwendet wird, um beispielsweise rechnerische Ungenauigkeiten zu berücksichtigen. Im Gegensatz zu herkömmlichen Backvorrichtungen kann dieser Sicherheitsfaktor jedoch abhängig von den Komponenten der Backvorrichtung gering gehalten werden. Ferner kann dieser Sicherheitsfaktor insbesondere abhängig vom Volumenstrom und insbesondere auch abhängig von der Last sehr gering gehalten werden, womit der Gasdurchsatz im Backraum optimiert wird.

Der in den Backraum eingebrachte Volumenstrom der Volumenbilanz umfasst insbesondere einen Konvektionsluftvolumenstrom, der durch ein Konvektionsgebläse in den Backraum eingebracht wird.

Gegebenenfalls umfasst der in den Backraum eingebrachte Volumenstrom der Volumenbilanz einen durch die Vorkopföffnung angesaugten Vorkopfvolumenstrom, der so gering wie möglich gehalten werden kann. Gegebenenfalls umfasst der in den Backraum eingebrachte Volumenstrom der Volumenbilanz einen Rahmenkühlungsluftvolumenstrom, welcher dazu eingerichtet ist, Teile der Backvorrichtung zu kühlen.

Der im Backraum expandierende Volumenstrom der Volumenbilanz umfasst beispielsweise den bei der Verbrennung des Brennstoffs mit der Primärluft entstehenden Verbrennungskomponentenvolumenstrom. Dieser umfasst beispielsweise die Verbrennungsgase, die bei einer Verbrennung des Brennstoffs mit Luft durch die Brenner in dem Backraum entstehen und/oder dort über die Brenner eingebracht werden, sowie gegebenenfalls auch Luftanteile bei der Verbrennung des Brennstoffs mit Luftüberschuss. Der Verbrennungskomponentenvolumenstrom umfasst somit, insbesondere einen Kohlendioxidvolumenstrom, einen Wasservolumenstrom, einen Stickstoffvolumenstrom und bei der Verbrennung mit Luftüberschuss, insbesondere einen auftretenden Luftüberschussvolumenstrom.

Darüber hinaus entsteht im Backraum gegebenenfalls ein Backdampfvolumenstrom, der durch die starke Erhitzung der, insbesondere wasserhaltigen, Backmasse dampfförmig aus dieser austritt. Backmassen zur Herstellung von gebackenen Produkten sind meist wasserhaltige Backmassen, wobei dieses Wasser beim Eintritt der Backzangen in den Backraum schlagartig verdampft und aus der in die Backvorrichtung eingebrachten Backmasse bzw. aus den, die Backmasse transportierenden / befördernden, Backzangen austritt.

Ferner umfasst die Volumenbilanz eine Berücksichtigung der Kompression oder Expansion der verschiedenen Volumenströme und/oder Gase durch die Erhitzung oder Abkühlung der Volumenströme und/oder der Gase im Backraum. Durch die Berücksichtigung einer Temperaturkorrektur der Volumenströme und/oder der Gase, insbesondere des Konvektionsluftvolumenstroms, kann eine Anpassung des Absaugvolumenstroms bzw. der Leistung des Absauggebläses vorgenommen werden und somit die Effizienz der Backvorrichtung erhöht werden.

Bevorzugt ist zur Steuerung und/oder Regelung des Gasdurchsatzes entweder der Konvektionsluftvolumenstrom und/oder der Absaugvolumenstrom gesteuert und/oder geregelt. Diese Steuerung und/oder Regelung ist beispielsweise durch eine Leistungsanpassung des Konvektionsgebläses oder des Absauggebläses möglich.

Die Bestimmung der Volumenbilanz setzt jedoch gegebenenfalls die Kenntnis weiterer Parameter des Verfahrens voraus. Gegebenenfalls kann zur Bestimmung des Konvektionsluftvolumenstroms ein Sensor vorgesehen sein, welcher dazu eingerichtet ist, den Volumenstrom zu messen und/oder zu überwachen. Gegebenenfalls kann solch ein Sensor auch für die Überwachung und/oder Messung des Absaugvolumenstroms vorgesehen sein. Gegebenenfalls kann solch ein Sensor auch für die Messung und/oder die Überwachung des Primärluftvolumenstroms und/oder des Brennstoffvolumenstroms vorgesehen sein. Gegebenenfalls kann auch ein Sensor vorgesehen sein, welcher dazu eingerichtet ist, den eingebrachten Backmassenvolumenstrom zu überwachen und/oder zu messen. Gegebenenfalls kann auch ein Sensor vorgesehen sein, welcher dazu eingerichtet ist, den eingebrachten Vorkopfvolumenstrom zu überwachen und/oder zu messen.Aus dem Backmassenvolumenstrom kann dann in weiterer Folge der Backmassenwassermassenstrom berechnet werden. Gegebenenfalls ist vorgesehen, dass eine Steuerungsvorrichtung für das Konvektionsgebläse und/oder das Absauggebläse vorgesehen ist.

Gegebenenfalls ist/sind eine Steuerungsvorrichtung und/oder eine Regelungsvorrichtung vorgesehen, welche dazu eingerichtet ist/sind, alle von den Sensoren und/oder Steuerungsvorrichtungen gemessenen und/oder überwachten Signale auszuwerten. Gegebenenfalls ist diese Steuerungsvorrichtung und/oder Regelungsvorrichtung dazu eingerichtet, das Verfahren zur Steuerung und/oder Regelung des Gasdurchsatzes im Backraum auszuführen. Alternativ oder zusätzlich kann ein über ein Gebläse eingebrachter Volumenstrom auch über Kennzahlen bzw. Kennfelder des Gebläses ermittelt werden. Beispielsweise kann aus der Drehzahl des Gebläses die Förderleistung und dadurch der geförderte Volumenstrom ermittelt werden.

Die Ausdehnung der Gase durch die Aufheizung im Backraum kann beispielsweise über das Verhältnis der Temperaturen des zugeführten Volumenstroms und/oder der zugeführten Volumenströme und/oder der Gase und der Temperatur im Backraum errechnet werden. Der Backdampfvolumenstrom ergibt sich insbesondere aus dem Wassergehalt der Backmasse, aus der Menge der pro Backzange aufgetragenen Backmasse, aus der Fördergeschwindigkeit des Endlosförderers bzw. der Backzangen und gegebenenfalls aus der Dichte des entstehenden Backdampfes.

Gegebenenfalls wird beim Betrieb der Backmaschine kein Teigaufguss vorgenommen. In diesem Fall erkennt die Steuerung und/oder Regelung insbesondere durch die Backmassenauftragsvorrichtung, dass der Backmassenvolumenstrom null ist, womit auch der Backdampfvolumenstrom der neu zugeführten Backzangen null ist. Durch diese Berechnung fällt in diesem Fall der Backdampfvolumenstrom aus der Bilanz.

Die Volumenströme der Verbrennungsgase ergeben sich insbesondere über herkömmliche Verbrennungsgleichungen des verwendeten Brennstoffs und der Primärluft. Gegebenenfalls muss ein Luftüberschussvolumenstrom berücksichtigt und abgesaugt werden, der bei Verbrennung des Brennstoffs mit Luftüberschuss auftritt. Gegebenenfalls kann der Verbrennungskomponentenvolumenstrom über die die Heizleistung und den Lambdawert berechnet werden.

Beispielsweise kann ein Sauerstoffsensor bzw. eine Lambdasonde vorgesehen sein, um den Luftüberschussvolumenstrom bestimmen zu können.

Der Vorkopfvolumenstrom kann beispielsweise nach Erfahrungswerten gewählt werden und insbesondere im Bereich von 200 bis 2000 m$^3$/h, bevorzugt zwischen 400 und 1200 m$^3$/h liegen. Besonders bevorzugt ist der Vorkopfvolumenstrom kleiner als 800 m$^3$/h.

Ein Vorteil des erfindungsgemäßen Verfahrens zur Steuerung und/oder Regelung des Gasdurchsatzes im Backraum durch Bilden einer Volumenbilanz liegt insbesondere in der Regelgeschwindigkeit und/oder Steuerungsgeschwindigkeit bzw. in der Möglichkeit einer vorrauschauenden Regelung und/oder Steuerung.

So steigt das abzusaugende Volumen bzw. der abzusaugende Volumenstrom schlagartig an, wenn von einem Betriebsmodus ohne Backmassenauftrag auf einen Betriebsmodus mit Backmassenauftrag gewechselt wird, da bei dem Backmassenauftrag schlagartig ein großes Backdampfvolumen aus der in die Backvorrichtung eingebrachten Backmasse bzw. aus den die Backmasse transportierenden Backzangen austritt. Da der Backmassenauftrag und der Austritt des Dampfes im Backraum um eine gewisse Zeit verzögert ist, kann schon im Vorhinein die Leistung des Absauggebläses erhöht werden, um auf den im Backraum expandierenden Volumenstrom reagieren zu können.

Somit kann oder können durch des erfindungsgemäße Verfahren vorausschauende Anpassungen der Leistung des Konvektionsgebläses und/oder des Absauggebläses vorgenommen werden. Dadurch wird die Effizienz der Backvorrichtung erhöht und insbesondere ein Eintritt von Backraumgasen in den Vorkopf verhindert.

Ein weiterer Vorteil des erfindungsgemäßen Verfahrens ist es, dass durch den genau angepassten Konvektionsluftstrom und/oder Absaugvolumenstrom nicht benötigte Volumenströme, insbesondere der Fehlluftvolumenstrom, auf ein Minimum reduziert oder verringert werden. Dadurch werden bevorzugt nur die unbedingt benötigten Volumenströme in den Backraum eingebracht, wodurch die Effizienz, insbesondere die Energieeffizienz, der Backvorrichtung um ein Vielfaches erhöht wird. Einerseits wird dadurch die benötigte Leistung des Konvektionsgebläses und/oder des Absauggebläses verringert. Andererseits ermöglicht das erfindungsgemäße Verfahren, dass der austretende Absaugvolumenstrom eine wesentlich höhere Temperatur aufweist als bei herkömmlichen Backvorrichtungen, wodurch gegebenenfalls nachgeschaltete Wärmetauscher deutlich effizienter betrieben werden können. Durch die höhere Temperatur des Absaugvolumenstroms ist auch eine deutliche Erhöhung des Wirkungsgrads eines gegebenenfalls nachgeschalteten Wärmetauschers möglich. Dadurch kann die Effizienz, insbesondere die Energieeffizienz der Backvorrichtung als auch der gesamten Produktion deutlich erhöht oder verbessert werden.

Durch die verminderte Verdünnung des Absaugvolumenstroms kann eine wesentlich höhere Austrittstemperatur des Absaugvolumenstroms ermöglicht werden.

Ein weiterer Vorteil der erfindungsgemäßen Steuerung und/oder Regelung ist, dass die Systeme zur Belüftung und/oder Klimatisierung des die Backvorrichtung umgebenden Gebäudes in ihrer Leistung wesentlich kleiner dimensioniert werden können.

Somit ist durch die Erhöhung der Effizienz der Backvorrichtung eine Erhöhung der Effizienz der gesamten Produktion möglich.

Gegebenenfalls ist vorgesehen, dass sich die endlose Backzangenkette längs einer in sich geschlossenen Umlaufbahn kontinuierlich umlaufend durch den Backraum bewegt, und dass die Backzangenkette auf- und zumachbare, insbesondere auf- und zuklappbare Backzangen umfasst.

Ferner ist gegebenenfalls vorgesehen, dass die Backzangen entlang der Umlaufbahn jeweils nacheinander: einen Backmassenauftragsbereich zum Auftrag einer Backmasse auf eine geöffnete Backzange, einen Schließbereich zum Schließen der Backzangen, den Backraum zum Backen der Backprodukte in den Backzangen, einen Öffenbereich zum Öffnen der Backzangen und einen Backproduktentnahmebereich zur Entnahme der gebackenen Produkte aus den geöffneten Backzangen durchlaufen.

Gegebenenfalls ist vorgesehen, dass die Umlaufbahn, entlang welcher die Backzangenkette umläuft, nacheinander: eine obere im Wesentlichen waagrecht verlaufende Transportebene, einen hinteren Umlenkbereich, eine untere im Wesentlichen waagrecht verlaufende Transportebene und einen vorderen Umlenkbereich umfasst, dass die Backzangenkette im hinteren Umlenkbereich durch Umlenkung um 180° von der oberen Transportebene auf die untere Transportebene geführt ist, und dass die Backzangenkette im vorderen Umlenkbereich durch Umlenkung um 180° von der unteren Transportebene wieder zurück auf die obere Transportebene geführt ist.

In weiterer Folge wird die Erfindung anhand einer, aber nicht ausschließlichen, exemplarischen Ausführungsform weiter beschrieben.

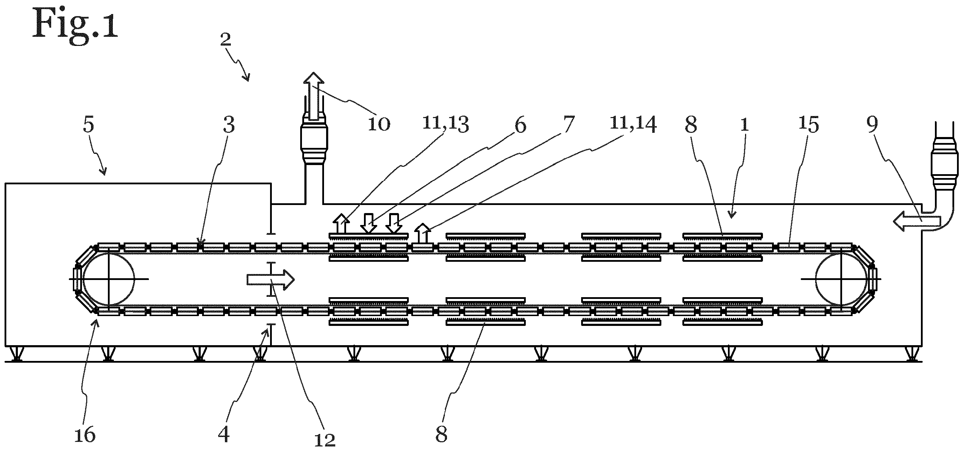

Fig. 1 zeigt eine schematische Seitenansicht einer möglichen Ausgestaltung eines erfindungsgemäßen Backofens.

Wenn nicht anders angegeben, so entsprechen die Bezugszeichen folgenden Komponenten: Backraum 1, Backvorrichtung 2, Backzangenkette 3, Vorkopföffnung 4, Vorkopf 5, Brennstoffvolumenstrom 6, Primärluftvolumenstrom 7, Heizvorrichtung 8, Konvektionsluftvolumenstrom 9, Absaugvolumenstrom 10, expandierender Volumenstrom 11, Vorkopfvolumenstrom 12, Verbrennungskomponentenvolumenstrom 13, Backdampfvolumenstrom 14, Backzange 15, Endlosförderer 16.

Fig. 1 zeigt eine schematische Seitenansicht einer Backvorrichtung 2, in welcher das erfindungsgemäße Verfahren zur Steuerung und/oder Regelung des Gasdurchsatzes angewendet werden kann. Die Backvorrichtung 2 umfasst einen Endlosförderer 16 bzw. eine Backzangenkette 3, an dem oder der aneinandergereihte Backzangen 15 vorgesehen sind. Die Backvorrichtung 2 hat einen Vorkopf 5 und einen Backraum 1. In dem Backraum 1 sind Heizvorrichtungen 8 angeordnet. In die Heizvorrichtung 8 werden ein Brennstoffvolumenstrom 6, insbesondere ein gasförmiger Brennstoff, und ein Primärluftvolumenstrom 7 eingebracht. Der Brennstoff des Brennstoffvolumenstroms 6 und die Primärluft des Primärluftvolumenstroms 7 werden zur Beheizung des Backraums 1 in den Heizvorrichtungen 8 des Backraums 1 verbrannt. Durch die Verbrennung des Brennstoffes und der Primärluft entsteht ein Verbrennungskomponentenvolumenstrom 13.

Der Verbrennungskomponentenvolumenstrom 13 umfasst insbesondere den Kohlendioxidvolumenstrom und den Wasservolumenstrom, der bei der Verbrennung des Brennstoffes mit der Primärluft entsteht. Ferner umfasst der Verbrennungskomponentenvolumenstrom 13 einen Stickstoffvolumenstrom, der zur Verbrennung verwendeten Primärluft und gegebenenfalls den Luftüberschussvolumenstrom, der bei einer Verbrennung des Brennstoffes mit Luftüberschuss auftritt. In den Backraum 1 bzw. in die Backvorrichtung 2 tritt ein Konvektionsluftvolumenstrom 9 über eine Konvektionsvorrichtung, insbesondere ein Konvektionsgebläse, ein. Zusätzlich zu den durch die Verbrennung des Brennstoffes und der Primärluft und des Konvektionsluftvolumenstroms 9 muss bei einem Betriebsmodus mit Teigaufguss ein Backdampfvolumenstrom 14 berücksichtigt werden. Dieser Backdampfvolumenstrom 14 entsteht durch die starke Erhitzung der Backmasse. Das in der wasserhaltigen Backmasse enthaltene Wasser verdampft beim Eintritt in den Backraum 1 schlagartig und tritt aus dieser aus. Der Backdampfvolumenstrom 14 ist insbesondere von der Backmassenwassermenge, die beim Backen aus der Backmasse austritt, und der Dichte des austretenden Backdampfvolumenstroms 14 abhängig. Um nun den Absaugvolumenstrom 10 gezielt zu regeln und/oder zu steuern, wird beim erfindungsgemäßen Verfahren, welches auch in dieser Ausführungsform angewandt wird, eine Volumenbilanz über die Backvorrichtung 2 und/oder den Backraum 1 erstellt. Hierfür werden der eingebrachte Volumenstrom, welcher aus dem Konvektionsluftvolumenstrom 9 und den Vorkopfvolumenstrom 12 gebildet ist, der im Backraum 1 expandierende Volumenstrom 11, welcher aus dem Verbrennungskomponentenvolumenstrom 13 und dem Backdampfvolumenstrom 14 gebildet ist, und der aus dem Backraum 1 abgesaugte Volumenstrom, der Absaugvolumenstrom 10, berücksichtigt. Die Leistung des Absauggebläses wird in dieser Ausführungsform derart geregelt, dass der Absaugvolumenstrom 10 größer ist als die Summe des eingebrachten Volumenstroms und der im Backraum 1 expandierende Volumenstrom 11. Damit wird gewährleistet, dass der eingebrachte Volumenstrom und der im Backraum 1 expandierende Volumenstrom 11 über das Absauggebläse abgesaugt werden. Ein Eintreten der Backraumgase in den Vorkopf 5 wird somit verhindert.

Die Backvorrichtung 2 besitzt in dieser Ausführungsform eine längs einer in sich geschlossenen Umlaufbahn kontinuierlich umlaufende und sich durch einen Backraum 1 bewegende endlose Backzangenkette 3. Die Backzangenkette 3 umfasst auf- und zumachbare, insbesondere auf- und zuklappbare, Backzangen 15. Die Backzangen 15 durchlaufen entlang der Umlaufbahn jeweils nacheinander: einen Backmassenauftragsbereich zum Auftrag einer Backmasse auf eine geöffnete Backzange 15, einen Schließbereich zum Schließen der Backzangen 15, den Backraum 1 zum Backen der Backprodukte in den Backzangen 15,

einen Öffenbereich zum Öffnen der Backzangen 15 und einen Backproduktentnahmebereich zur Entnahme der gebackenen Produkte aus den geöffneten Backzangen 15. Die Umlaufbahn, entlang welcher die Backzangenkette 3 umläuft, umfasst nacheinander: eine obere im Wesentlichen waagrecht verlaufende Transportebene, einen hinteren Umlenkbereich, eine untere im Wesentlichen waagrecht verlaufende Transportebene und einen vorderen Umlenkbereich. Die Backzangenkette 3 ist im hinteren Umlenkbereich durch Umlenkung um 180° von der oberen Transportebene auf die untere Transportebene geführt. Ferner ist die Backzangenkette 3 im vorderen Umlenkbereich durch Umlenkung um 180° von der unteren Transportebene wieder zurück auf die obere Transportebene geführt.

**Patentansprüche**

1. Verfahren zur Steuerung und/oder Regelung des Gasdurchsatzes im Backraum (1) einer Backvorrichtung (2), bei der zum Herstellen gebackener, bevorzugt essbarer, Produkte eine endlose Backzangenkette (3) entlang einer geschlossenen Umlaufbahn durch eine Vorkopföffnung (4) von einem Backraum (1) in einen Vorkopf (5) und durch eine Vorkopföffnung (4) vom Vorkopf (5) in den Backraum (1) bewegt wird, umfassend folgende Schritte:

   - gesteuertes oder geregeltes Zuführen eines Brennstoffvolumenstroms (6) eines, insbesondere gasförmigen, Brennstoffs und eines Primärluftvolumenstroms (7) in die Backvorrichtung (2), wobei der Brennstoff mit der Primärluft des Primärluftvolumenstrom (7) zur Beheizung des Backraums (1) in einer Heizvorrichtung (8) verbrannt wird,
   - gegebenenfalls gesteuertes oder geregeltes Zuführen eines Konvektionsluftvolumenstroms (9) über ein Konvektionsgebläse, wobei der Konvektionsluftvolumenstrom (9) zur Bildung einer künstlichen Konvektionsströmung im Backraum (1) und gegebenenfalls als Sekundärluft den Backraum (1) durchströmt,
   - und gesteuertes oder geregeltes Absaugen eines Absaugvolumenstroms (10) aus dem Backraum (1) durch ein Absauggebläse,
   **dadurch gekennzeichnet,**

   - **dass** zur Steuerung und/oder Regelung des Absaugvolumenstroms (10) und/oder des Konvektionsluftvolumenstroms (9) eine Volumenbilanz des in den Backraum (1) eingebrachten Volumenstroms, des im Backraum (1) expandierenden Volumenstroms (11) und des aus dem Backraum (1) abgesaugten Volumenstroms gebildet wird,
   - und **dass** die Leistung des Absauggebläses und/oder die Leistung des Konvektionsgebläses derart gesteuert und/oder geregelt werden, dass der abgesaugte Volumenstrom größer oder gleich der Summe des eingebrachten Volumenstroms und des im Backraum (1) expandierenden Volumenstroms (11) ist, sodass der eingebrachte Volumenstrom und der im Backraum (1) expandierende Volumenstrom (11) über das Absauggebläse abgesaugt, insbesondere vollständig, abgesaugt werden.

2. Verfahren nach Anspruch 1, **dadurch gekennzeichnet,**

   - **dass** der im Backraum (1) expandierende Volumenstrom (11) der Volumenbilanz den durch die Verbrennung des Brennstoffvolumenstroms (6) mit dem Primärluftvolumenstrom (7) entstehenden Verbrennungskomponentenvolumenstrom (13) und einen beim Backen einer Backmasse austretenden Backdampfvolumenstrom (14), umfasst
   - oder dass der im Backraum (1) expandierende Volumenstrom (11) der Volumenbilanz durch den durch die Verbrennung des Brennstoffvolumenstroms (6) mit dem Primärluftvolumenstrom (7) entstehenden Verbrennungskomponentenvolumenstrom (13) und durch einen beim Backen einer Backmasse austretenden Backdampfvolumenstrom (14) gebildet ist.

3. Verfahren nach Anspruch 1 oder 2, **dadurch gekennzeichnet,**

   - **dass** der in den Backraum (1) eingebrachte Volumenstrom der Volumenbilanz den Konvektionsluftvolumenstrom (9) und gegebenenfalls einen durch die Vorkopföffnung (4) angesaugten Vorkopfvolumenstrom (12) umfasst,
   - oder dass der in den Backraum (1) eingebrachte Volumenstrom der Volumenbilanz durch den Konvektionsluftvolumenstrom (9) und den gegebenenfalls durch die Vorkopföffnungen (4) angesaugten Vorkopfvolumenstrom (12) gebildet ist.

4. Verfahren nach einem der Ansprüche 1 bis 3, **dadurch gekennzeichnet, dass** der aus dem Backraum (1) abgesaugte Volumenstrom der Volumenbilanz dem Absaugvolumenstrom (10) entspricht.

5. Verfahren nach einem der Ansprüche 1 bis 4, **dadurch gekennzeichnet, dass** bei der Bildung der Volumenbilanz des in den Backraum (1) eingebrachten Volumenstroms, des im Backraum (1) expandierenden Volumenstroms (11) und des aus dem Backraum (1) abgesaugten Volumenstroms der Unterschied zwischen der Temperatur des eingebrachten Volumenstroms beim Eintritt in die Backvorrichtung (2) oder in den Backraum (1) und der Temperatur des eingebrachten Volumenstroms beim Austritt aus der Backvorrichtung (2) oder aus dem Backraum (1) berücksichtigt wird,
wobei die Volumenexpansion durch die Aufheizung des eingebrachten Volumenstroms berücksichtigt wird oder werden.

6. Verfahren nach einem der Ansprüche 3 bis 5, **dadurch gekennzeichnet, dass** der beim Backen der Backmasse austretende Backdampfvolumenstrom (14), nach folgender Vorschrift gebildet wird:

$$\dot{V}_{Backdampf} = \frac{\dot{m}_{Teigwasser}}{\rho_{Teigdampf}}$$

wobei $\dot{V}_{Backdampf}$ der austretende Backdampfvolumenstrom (14) ist, wobei $\dot{m}_{Teigwasser}$ der beim Backen aus der Backmasse austretende Backmassenwassermassenstrom ist und wobei $\rho_{Teigdampf}$ die Dichte des austretenden Backdampfvolumenstroms (14) ist.

7. Verfahren nach einem der Ansprüche 1 bis 6, **dadurch gekennzeichnet, dass** der abgesaugte Volumenstrom um einen Sicherheitsfaktor im Bereich zwischen 1,00 und 1,50, bevorzugt zwischen 1,05 und 1,25, besonders bevorzugt 5% größer ist als die Summe des eingebrachten Volumenstroms und des im Backraum (1) expandierenden Volumenstroms (11), wodurch ein Eintritt von Backraumgasen in den Vorkopf (5) verhindert wird.

8. Verfahren nach einem der Ansprüche 1 bis 7, **dadurch gekennzeichnet, dass** die Leistung des Absauggebläses durch die Steuerung oder Regelung der Frequenz des Hauptabzugsventilators der Backvorrichtung (2) erfolgt.

9. Verfahren nach einem der Ansprüche 1 bis 8, **dadurch gekennzeichnet, dass** die Bildung der Volumenbilanz nach folgender Vorschrift durchgeführt wird:

$$\dot{V}_{Absaug} = \left( \left( \dot{V}_{CO2} + \dot{V}_{H_2O} + \dot{V}_{N_2} + \dot{V}_{\ddot{U}berschussluft,T_{Ab}} \right) + \left( \dot{V}_{Konvektionsluft,T_{Zu}} \cdot \frac{T_{Ab}}{T_{Zu}} \right) \right.$$
$$\left. + \dot{V}_{Backdampf} + \dot{V}_{Vorkopf,T_{Ab}} \right) \cdot S$$

wobei $\dot{V}_{Absaug}$ der Absaugvolumenstrom (10) ist,
wobei der Verbrennungskomponentenvolumenstrom (13) aus $\dot{V}_{CO2}$, $\dot{V}_{H_2O}$, $\dot{V}_{N_2}$ und $\dot{V}_{\ddot{U}berschussluft,T_{Ab}}$ gebildet ist,
wobei $\dot{V}_{CO2}$ der bei der Verbrennung des Brennstoffs mit der Primärluft und gegebenenfalls Sekundärluft entstehende Kohlendioxidvolumentrom ist,
wobei $\dot{V}_{H_2O}$ der bei der Verbrennung des Brennstoffs mit der Primärluft und gegebenenfalls Sekundärluft entstehende Wasservolumenstrom ist,
wobei $\dot{V}_{N_2}$ der Stickstoffvolumenstrom der zur Verbrennung verwendeten Primärluft und gegebenenfalls Sekundärluft ist,
wobei $\dot{V}_{\ddot{U}berschussluft,T_{Ab}}$ der bei einer Verbrennung des Brennstoffs mit Luftüberschuss auftretende Luftüberschussvolumenstrom mit der Temperatur beim Austritt aus der Backvorrichtung (2) oder aus dem Backraum (1) ist,
wobei $\dot{V}_{Konvektionsluft,T_{Zu}}$ der Konvektionsluftvolumenstrom (9) mit der Temperatur am Eintritt in die Backvorrichtung (2) oder in den Backraum (1) ist,

wobei $T_{Ab}$ *die* Temperatur des Konvektionsluftvolumenstroms (9) beim Austritt aus der Backvorrichtung (2) oder aus dem Backraum (1) ist,

wobei $T_{Zu}$ die Temperatur des Konvektionsluftvolumenstroms (9) beim Eintritt in die Backvorrichtung (2) oder in den Backraum (1) ist,

wobei $\dot{V}_{Backdampf}$ der beim Backen der Backmasse austretende Backdampfvolumenstrom (14) ist,

wobei $\dot{V}_{Vorkopf,T_{Ab}}$ der Vorkopfvolumenstrom (12) mit der Temperatur beim Austritt aus der Backvorrichtung (2) oder aus dem Backraum (1) ist" und wobei *S* der Sicherheitsfaktor ist.

10. Verfahren nach einem der Ansprüche 1 bis 9 **dadurch gekennzeichnet, dass** dem Verfahren eine Vorheizphase und eine Trocknungsphase vorgeschalten ist und das Verfahren einen ersten Normalbetriebsmodus und einen zweiten Normalbetriebsmodus umfasst,

   - und dass die Vorheizphase der Trocknungsphase vorgeschalten ist,
   - und dass die Trocknungsphase dem ersten Normalbetriebsmodus vorgeschalten ist,
   - und dass der erste Normalbetriebsmodus dem zweiten Normalbetriebsmodus vorgeschalten ist.

11. Verfahren nach einem der Ansprüche 1 bis 10, **dadurch gekennzeichnet, dass** dem Verfahren eine Vorheizphase vorgeschalten ist, wobei die in der Backvorrichtung (2) angeordnete Heizvorrichtung (8) mit einer Leistung zwischen 25% und 75%, bevorzugt zwischen 35% und 65%, besonders bevorzugt 50% ihrer maximalen Leistung betrieben wird und das Absauggebläse und das Konvektionsgebläses mit einer Leistung zwischen 50 und 100%, bevorzugt zwischen 75% und 100%, besonders bevorzugt 100% ihrer maximalen Leistung betrieben werden.

12. Verfahren nach einem der Ansprüche 1 bis 11, **dadurch gekennzeichnet, dass** dem Verfahren eine Trocknungsphase vorgeschalten ist, wobei die in der Backvorrichtung (2) angeordnete Heizvorrichtung (8) mit einer Leistung zwischen 50% und 85%, bevorzugt zwischen 60% und 75%, besonders bevorzugt 66% ihrer maximalen Leistung betrieben wird und das Absauggebläse und das Konvektionsgebläse mit einer Leistung zwischen 50% und 100%, bevorzugt zwischen 75% und 100%, besonders bevorzugt 100% ihrer maximalen Leistung betrieben werden.

13. Verfahren nach einem der Ansprüche 1 bis 12, **dadurch gekennzeichnet, dass** das Verfahren einen ersten Normalbetriebsmodus umfasst, wobei in diesem ersten Normalbetriebsmodus die in der Backvorrichtung (2) angeordnete Heizvorrichtung (8) mit einer Leistung zwischen 50% und 100%, bevorzugt zwischen 75% und 100%, besonders bevorzugt 100% ihrer maximalen Leistung betrieben wird.

14. Verfahren nach einem der Ansprüche 1 bis 13, **dadurch gekennzeichnet, dass** das Verfahren einen zweiten Normalbetriebsmodus umfasst, wobei in diesem zweiten Normalbetriebsmodus die Leistung der in der Backvorrichtung (2) angeordneten Heizvorrichtung (8) durch Vorgabe einer Zieltemperatur, insbesondere einer Backplattenzieltemperatur, geregelt oder gesteuert wird, wobei die Backplattentemperatur durch eine auf der Außenseite einer Backplatte der Backzangenkette (3) angeordneten Temperaturmessvorrichtung, insbesondere eines Temperatursensors bestimmt wird oder bestimmbar ist.

15. Verfahren nach einem der Ansprüche 1 bis 14, **dadurch gekennzeichnet, dass** der Konvektionsluftvolumenstrom (9) einen Rahmenkühlungsluftvolumenstrom umfasst, wobei der Rahmenkühlungsluftvolumenstrom dazu eingerichtet ist, Teile der Backvorrichtung (2) zu kühlen.

# Fig.1

EP 3 335 563 A1

Europäisches
Patentamt

European
Patent Office

Office européen
des brevets

**EUROPÄISCHER RECHERCHENBERICHT**

Nummer der Anmeldung

EP 16 20 4210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | EP 3 103 345 A1 (HAAS FOOD EQUIPMENT GMBH [AT]) 14. Dezember 2016 (2016-12-14)<br>* das ganze Dokument *<br>----- | 1-5,7,8, 10-15<br>6,9 | INV.<br>A21B1/24<br>A21B1/26<br>A21B1/28<br>A21B1/48 |
| X | US 5 512 312 A (FORNEY ROBERT B [US] ET AL) 30. April 1996 (1996-04-30)<br>* Spalte 5, Zeile 4 - Spalte 12, Zeile 45; Abbildungen 1-6 *<br>----- | 1 | |

RECHERCHIERTE
SACHGEBIETE (IPC)

A21B

Der vorliegende Recherchenbericht wurde für alle Patentansprüche erstellt

| Recherchenort | Abschlußdatum der Recherche | Prüfer |
|---|---|---|
| Den Haag | 9. Februar 2017 | Makúch, Milan |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 20 4210

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-02-2017

| Im Recherchenbericht angeführtes Patentdokument | Datum der Veröffentlichung | Mitglied(er) der Patentfamilie | Datum der Veröffentlichung |
|---|---|---|---|
| EP 3103345 A1 | 14-12-2016 | EP 3103345 A1<br>WO 2016198375 A1 | 14-12-2016<br>15-12-2016 |
| US 5512312 A | 30-04-1996 | CA 2192979 A1<br>DE 69526659 D1<br>DE 69526659 T2<br>EP 0782395 A1<br>US 5512312 A<br>US 5942142 A<br>WO 9534220 A1 | 21-12-1995<br>13-06-2002<br>02-01-2003<br>09-07-1997<br>30-04-1996<br>24-08-1999<br>21-12-1995 |

EPO FORM P0461

Für nähere Einzelheiten zu diesem Anhang : siehe Amtsblatt des Europäischen Patentamts, Nr.12/82